# EUROPEAN PATENT APPLICATION

(11) **EP 0 995 632 A1**
(43) Date of publication of application: **26.04.2000**
(21) Application number: 99307746.0
(22) Date of filing: 30.09.1999
(51) Int. Cl.: B60N 3/00

(54) **Vehicle seating assembly**

(30) Priority: 30.09.1998 GB 9821171
(71) Applicant: Magna Seating Systems GMBH, 97816 Lohr Am Main (DE)
(72) Inventor: Wolfrum, Dieter Autoseat Technologies Limited, 42859 Remscheid (DE)
(74) Representative: Raynor, Simon Mark

(57) **Abstract**

A seating assembly for a vehicle, most particularly, a motor land vehicle such as a car, is disclosed. The seating assembly comprises a seat base and a seat back (2), a deployable table assembly being disposed within the seat back (2). The table assembly comprises a leaf (10) pivotable about a generally horizontal axis between a closed position, in which it is located within a recess (22) in the seat back (2) and an open position in which a supporting surface of the leaf (10) is substantially horizontal to provide a supporting surface for objects usable by a person behind the seat. The leaf (10) is supported in the open position by a strut (18) which is located within a secondary recess (20) when the leaf is in its closed position.

## Description

The present invention relates to vehicle seating assemblies. In particular, but not exclusively, the invention relates to motor land vehicle (for example, car) seats that incorporate a table for use by a passenger seated behind the seat.

An aim of the present invention is to provide improvements generally to seating assemblies for vehicles. More specifically, an aim of the invention is to provide a seating assembly that can provide a table for use by a person sitting behind the seating assembly.

From a first aspect, the invention provides a seating assembly for a vehicle that incorporates a table.

More specifically, from a second aspect, the invention provides a seating assembly for a vehicle comprising a seat having a base and a back characterised in that the seating assembly further includes a table assembly including a leaf attached to the seat back and pivotable about an axis between a closed position and an open position.

In a seating assembly embodying the invention, the leaf typically includes a supporting surface that is generally horizontal when the leaf is in the open position. The supporting surface can be used by a person to the rear of the seat as a table top to support objects.

In a preferred embodiment of the invention, the leaf extends generally downwardly from the axis when in the closed position.

Preferably, the leaf is accommodated in a recess in the seat back when in the closed position. Most preferably, the leaf is approximately flush with the seat back when in the closed position.

In preferred embodiments of the invention, the table assembly further comprises a strut operable to support the leaf in the open position. In such embodiments, the strut may engage with stop surfaces of the leaf in order to retain the leaf in the open position.

From a third aspect, the invention provides a front seat for a car incorporating a seating assembly according to either the first or the second aspect defined above.

From yet another aspect, the invention provides a motor road vehicle such as a car incorporating a seating assembly according to either the first or the second aspect defined above.

An embodiment of the invention will now be described, by way of example, with reference to the accompanying drawings, in which:
Figure 1 is a cross-sectional side view of a seat back, being part of a seat assembly embodying the invention, showing a table in open and closed positions;
Figure 2 is a perspective view, showing the seat back and the table of Figure 1 in an open position;
Figure 3 is a rear view of the table assembly, showing the table assembly in a closed position;
Figure 4 is a section on line A-A of Figure 3;
Figure 5 is a section on line B-B of Figure 3;
Figure 6 is a side view of the table assembly in the direction of arrow Z of Figure 3;
Figure 7 is a section on line C-C of Figure 3; and
Figure 8 is a section on line D-D of Figure 3, showing the table in open and closed positions.

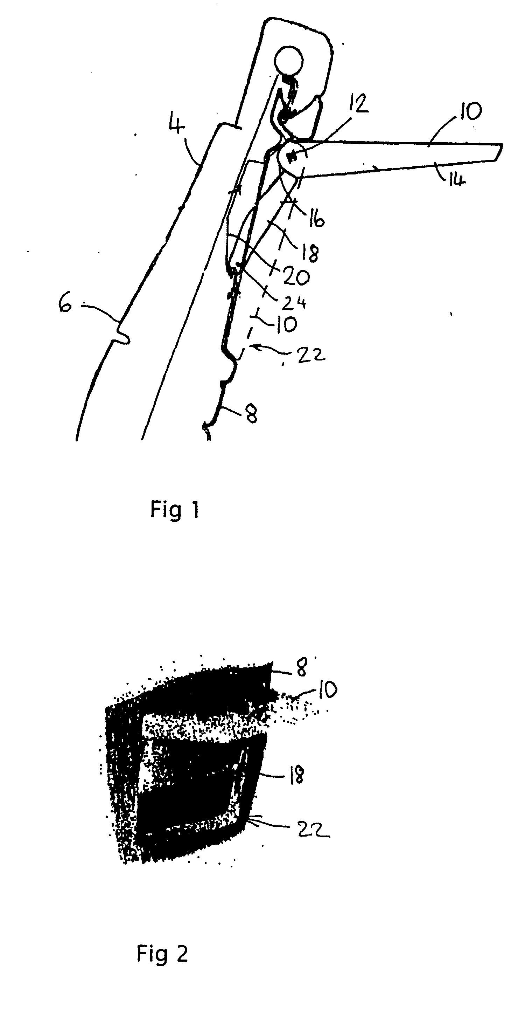

A seat assembly embodying the invention includes a seat having a base (not shown) and a back 2 as illustrated in Figs. 1 and 2. This exemplary embodiment is intended for use in a motor road vehicle, and is intended to be mounted directly in front of another seat in the vehicle. The seat is therefore constructed in a accordance with relevant motor vehicle standards and practices which will be familiar to those skilled in the art. For example, the seat may be suitable for use as the front seat of a passenger car.

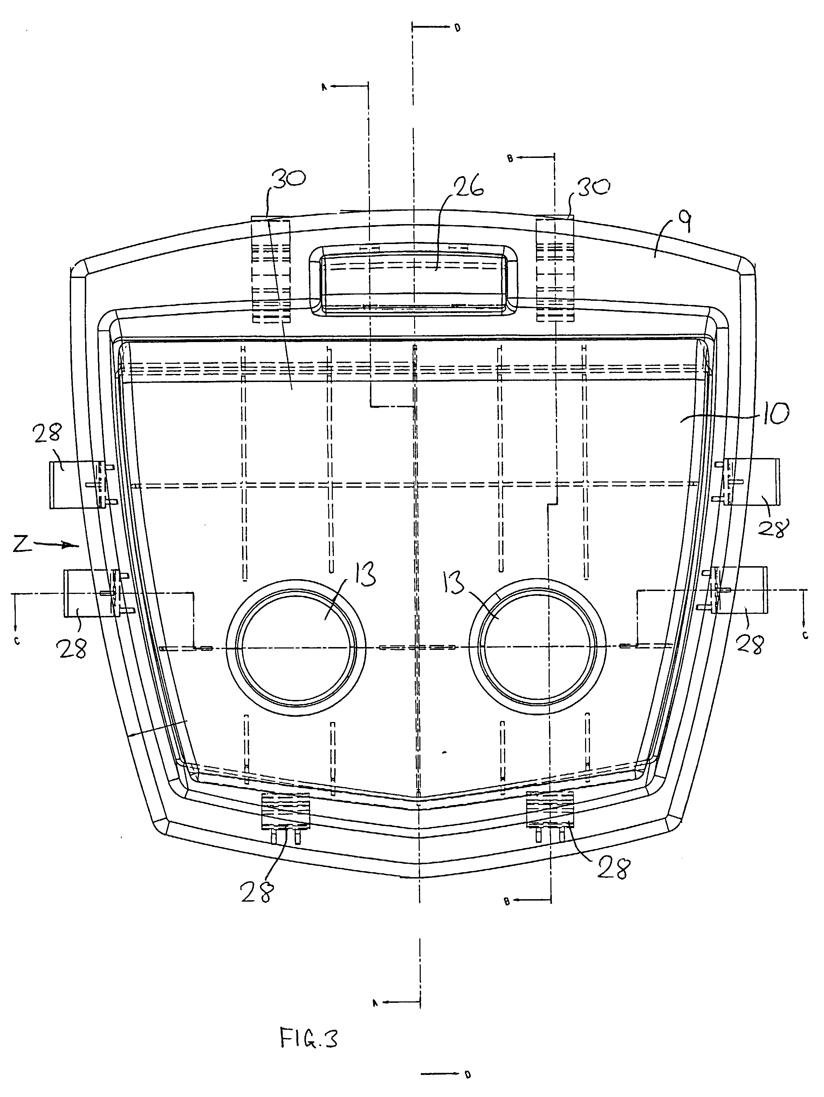

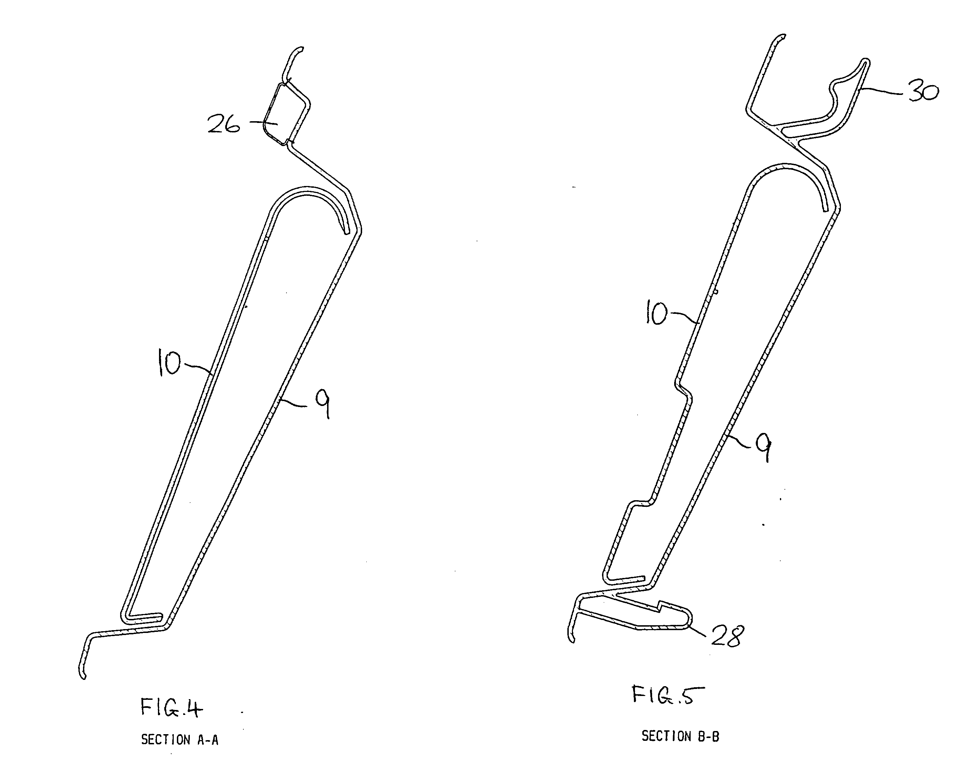

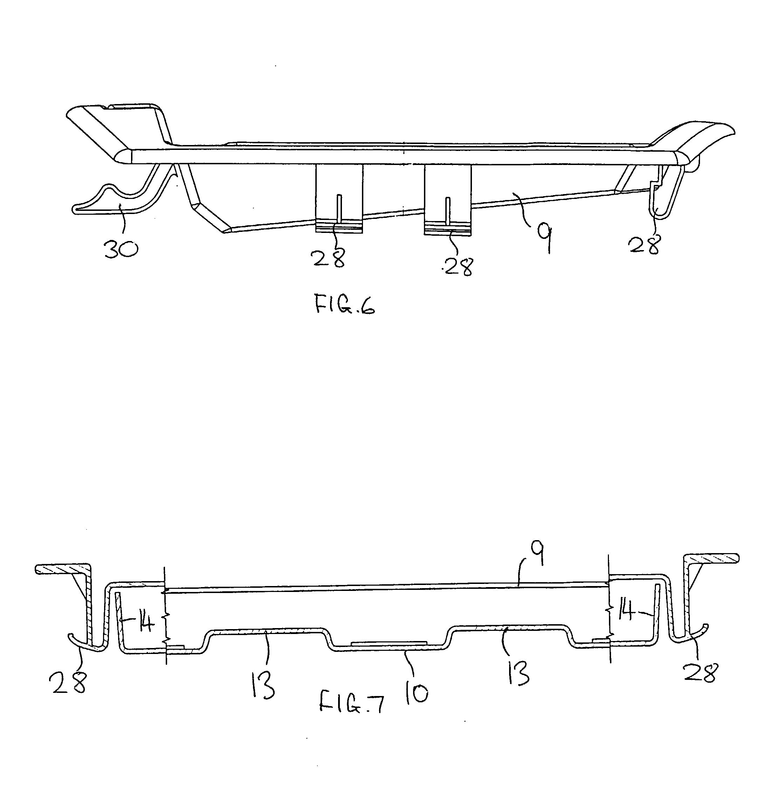

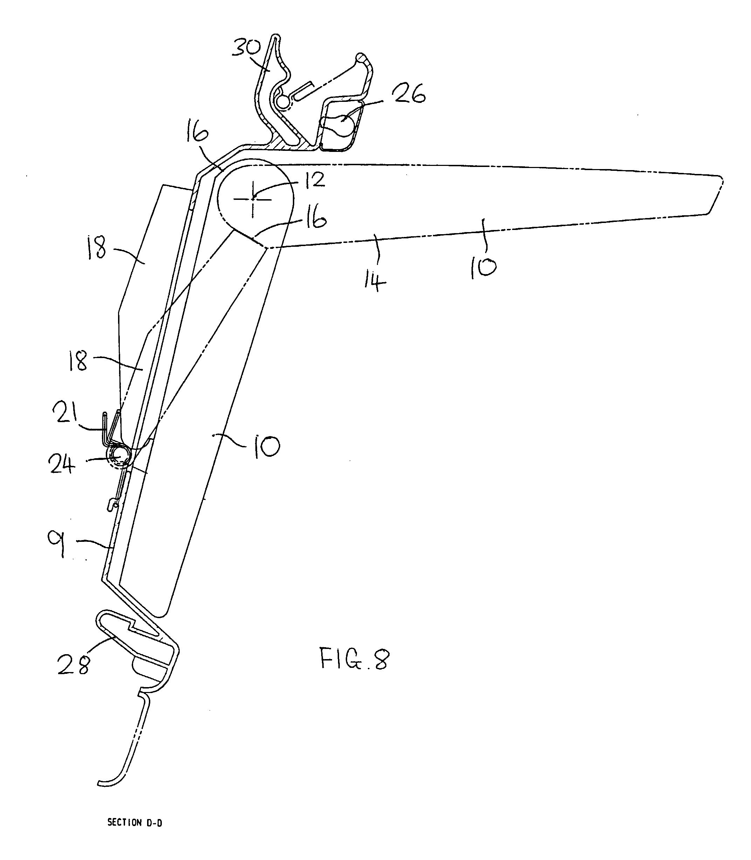

With reference to Figure 1, the seat back 2 has a front surface 4 that is provided with cushions 6 to support an occupant of the seat, and a rear surface 8. A table assembly is constructed in the back 2 of the seat for use by a passenger behind the seat, for example a passenger sitting in the rear seat of a car. The construction of the table assembly will now be described with reference to Figures 1 to 8.

The table assembly includes a frame assembly 9 and a leaf 10, and is located within a recess 22 formed in the rear surface 8 of the seat back 2. The recess 22 extends part way across the width of the seat back 2. The table assembly is mounted on internal structural members (not shown) of the seat back 2 for pivotable movement of the leaf 10 about a substantially horizontal pivot axis 12 between an open position and a closed position. The leaf 10 is formed with a generally flat, substantially rectangular supporting surface suitable for supporting objects when the leaf is in its open position. The supporting surface has depressions 13 and/or other formations for retaining objects placed thereon. Lateral side walls 14 of the leaf 10 extend from opposite side regions of the supporting surface, such that the leaf 10 has a general cross-sectional U-shape.

In the open position, the supporting surface of the leaf 10 is substantially horizontal and the leaf 10 projects rearwardly from the seat back 2, as shown in solid lines in Figure 1 and in Figure 2. In the closed position, the supporting surface lies substantially flush with the rear surface of the seat back 2 surrounding the recess 22, as shown in broken lines in Figure 1. The sides 14 of the leaf 10 extend downwards (when the leaf 10 is in the open position) to provide the leaf 10 with rigidity.

A forward edge portion 16 of each of the sides 14 (that is to say, a portion near to the pivot axis 12) is shaped to provide a stop surface 16, the purpose of which will be described below.

A strut 18 is attached to the rear surface of the frame assembly 9 below the pivot axis 12 of the leaf. The strut 18 extends across the width of the frame assembly 9 and is pivotable about a horizontal axis 24 close to its lower edge. The strut 18 can move between a closed position in which it lies within a secondary recess 20 within the aforementioned recess 22, and an opened position in which it tilts backwards from the seat back 2. With the leaf 10 in its open position, upon moving the strut 18 to its open position, an upper end surface of the strut 18 engages the stop surfaces 16 of the sides 14, to support the leaf 10 in the open position, and to prevent it from returning to its closed position. The strut 18 is loaded and positioned by means of a torsion spring 21, the spring urging the strut in a direction out from the secondary recess 20 towards its open position.

A clip (not shown) may optionally be provided to clip the leaf 10 into the closed position when the table is not in use.

To use the table, the leaf 10 is lifted from its closed position flush with the seat back to the substantially horizontal open position. As the leaf 10 is lifted, the strut 18 springs outwards under the bias of the torsion spring 21 from within its recess 20 and engages the stop surfaces 16 of the leaf sides 14, to support the leaf 10 in the open position.

To close the leaf 10, the strut 18 is pushed back into its recess 20 and the leaf 10 is then hinged downwards and clipped in its closed position.

The table assembly further includes a light 26 mounted in the frame assembly 9 for illuminating the surface of the leaf 10. Resilient clips 28 and hooks 30 are provided on the frame assembly 9 for securing the table assembly to the seat back 2 within the recess 22.

## Claims

1. A seating assembly for a vehicle comprising a seat having a base and a back (2) characterised in that the seating assembly further includes a table assembly including a leaf (10) attached to the back (2) and pivotable about an axis (12) between a closed position and an open position.

2. A seating assembly according to claim 1 in which the leaf (10) includes a supporting surface which is generally horizontal when the leaf (10) is in the open position.

3. A seating assembly according to claim 1 or claim 2 in which the leaf (10) extends generally downwardly from the axis (12) when in the closed position.

4. A seating assembly according to any preceding claim in which the leaf (10) is accommodated in a recess (22) in the seat back (2) when in the closed position.

5. A seating assembly according to claim 4 in which the leaf (10) is approximately flush with the seat back (2) when in the closed position.

6. A seating assembly according to any preceding claim in which the table assembly further comprises a strut (18) operable to support the leaf when in the open position.

7. A seating assembly according to claim 6 in which the strut (18) engages with stop surfaces (16) of the leaf (10) in order to retain the leaf (10) in the open position.

8. A front seat for a car incorporating a seating assembly according to any preceding claim.

9. A motor road vehicle incorporating a seating assembly according to any preceding claim.
